# EUROPEAN PATENT SPECIFICATION

(11) **EP 3 032 059 B1**
(45) Date of publication and mention of the grant of the patent: **26.09.2018**
(21) Application number: 15188308.9
(22) Date of filing: 05.10.2015
(51) Int. Cl.: F01N 3/20, F01N 9/00

(54) **REAGENT DOSING SYSTEM**
REDUKTIONSMITTEL-DOSIERSYSTEM
SYSTÈME DE DOSAGE D'UN AGENT RÉDUCTEUR

(30) Priority: 09.12.2014 GB 201421869
(43) Date of publication of application: 15.06.2016
(73) Proprietor: Delphi International Operations Luxembourg S.à r.l., 4940 Bascharage (LU)
(72) Inventor: SYKES, Martin, Rainham, Kent ME8 0RB (GB); SPADAFORA, Peter, L8023 Strassen (LU); OLDFIELD, Nick, Maidstone, Kent ME16 0PP (GB); COSTER, Simon, Chatham, Kent ME4 4ZH (GB); THOMPSON, Phillip, Rainham, Kent ME8 7PR (GB)
(74) Representative: Delphi France SAS

(56) References cited:
- EP-A1- 0 310 815
- EP-A2- 0 928 884
- EP-A2- 2 505 804
- WO-A1-2008/152105
- WO-A1-2011/088926
- DE-A1-102009 016 810
- DE-A1-102011 081 580
- JP-A- 2014 156 821
- US-A- 5 884 475

## Description

### TECHNICAL FIELD

The present invention relates to a reagent dosing system for dosing a reagent into the exhaust gas flow of an internal combustion engine, and specifically to a Selective Catalytic Reduction dosing system in a vehicle such as a diesel vehicle.

### BACKGROUND OF THE INVENTION

Reagent dosing systems such as Selective Catalytic Reduction (SCR) dosing systems are used in vehicles to reduce emissions such as nitrogen oxide (NOx) in the exhaust gas flow, by converting the emissions into other substances.

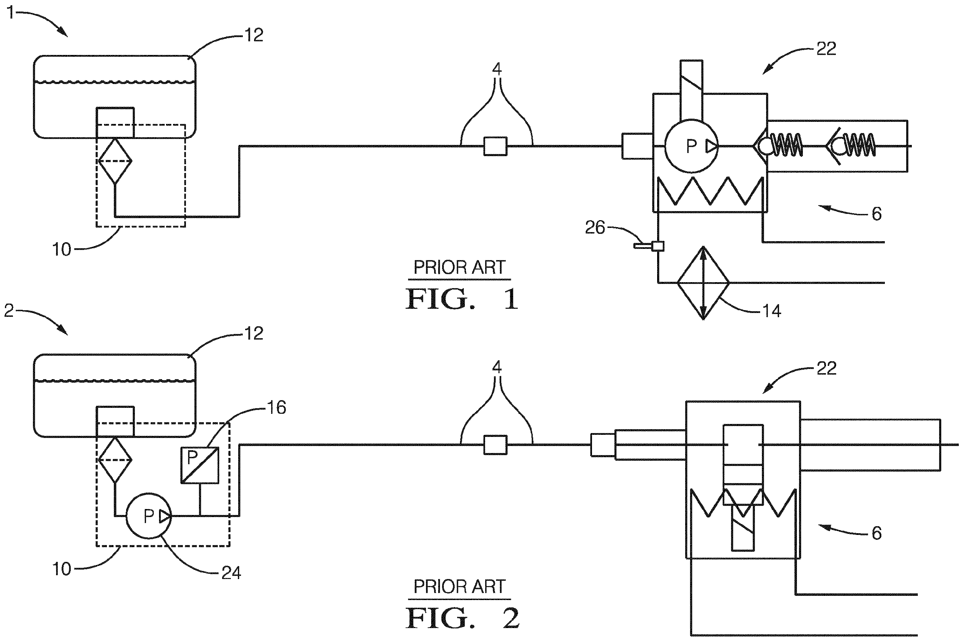

A known SCR dosing system 1, as illustrated in Figure 1, doses a reagent comprising urea into an exhaust gas flow. The system 1 comprises a urea tank 12, a urea delivery module (UDM) 10, a feed line 4, and a coolant system 6 comprising a cooler 14 and a temperature sensor 26. The UDM 10 is adjacent, or fitted to, the urea tank 12. The UDM 10 integrates three sensors, for filtering and tank heating, temperature and concentration, and urea level. Urea is delivered from the urea tank 12, via the UDM 10 and the feed line 4, to a dosing injector module 22 comprising a water-cooled pump injector.

A flow of engine coolant, which runs at too high a temperature to be used directly for cooling urea, is further cooled by the cooler 14. The subsequent flow of coolant to the injector module 22 prevents the urea from reaching boiling point during hot vehicle running conditions.

The additional cooler 14 represents an additional parts cost, and results in issues with installation of the system into a vehicle.

In a further known SCR dosing system 2, as illustrated in Figure 2, pressurised urea is supplied to a dosing injector module 22 comprising a water-cooled solenoid injector. A pressuring means comprising a pump 24 and a pressure sensor 16 directly pressurises the urea, within part of the feed line 4, after is has left the urea tank. The boiling point of the urea is increased by the pressurisation, and therefore the system 2 can operate with a coolant system 6 supplied with normal engine coolant at 90 - 110°C, without the requirement for an additional cooler. However, the pump 24 required to directly pressurise the urea is complex and expensive, and must be sufficiently robust to the accommodate the pressures of frozen urea as described in US5884475A, EP098884A, WO2011/088926A and EP2505804A.

Additionally, prior art SCR dosing systems may require a purge feature which is activated on engine shut-down, thereby requiring a separate purge pump.

A SCR dosing system according to the preamble of claim 1 is disclosed in WO2011/088926 A.

### SUMMARY OF THE INVENTION

It is an object of the present invention to provide an improved reagent dosing system which at least mitigates the above mentioned problems.

Accordingly the present invention provides, in a first aspect, a reagent dosing system in accordance with claim 1.

The volume of reagent which is pressurised by the source of air pressure comprises a secondary volume of reagent in a secondary vessel, separate to the main reagent tank, wherein the secondary volume of reagent is smaller than the main volume of reagent.

A flexible separating member may be located within the secondary vessel, to separate a volume of air and the secondary volume of reagent; wherein the volume of air is pressurised by the source of air pressure, thereby to apply a force to the flexible separating member and thereby cause pressurisation of the secondary volume of reagent.

During the refill cycle, the air pump may vent air from the volume of air, thereby causing the flexible separating member to move to a static position and create a vacuum in the secondary volume of reagent, thereby causing reagent to be drawn into the secondary volume from the main supply.

A one-way valve may be provided to prevent a leak flow of reagent from the secondary volume to the main supply.

The source of air pressure is a coolant expansion tank of the vehicle, which communicates with the secondary vessel via a pathway comprising an air pressure pathway section.

The pathway may further comprise a reagent filled pathway section, wherein the air pressure pathway section and the reagent filled pathway section are separated by a piston; and wherein the volume of reagent which is pressurised by the source of air pressure further comprises a volume of reagent within the reagent filled pathway section; and wherein the source of air pressure pressurises the volume of reagent via the piston.

### BRIEF DESCRIPTION OF THE DRAWINGS

The present invention is now described by way of example with reference to the accompanying drawings in which:
Figure 3 is a schematic representation of a SCR dosing system not in accordance with the present invention;
Figure 4 is a schematic representation of a SCR dosing system not in accordance with the present invention;
Figure 5 is a schematic representation of a SCR dosing system not in accordance with the present invention;
Figure 6 is a schematic representation of an SCR dosing system comprising a pressurising means in accordance with a first embodiment of the present invention;
Figure 7 is a schematic partial representation of a SCR dosing system in accordance with a second embodiment of the present invention;
and
Figure 8 is a schematic representation of a piston in accordance with the SCR dosing system of Figure 7.

### DESCRIPTION OF THE PREFERRED EMBODIMENTS

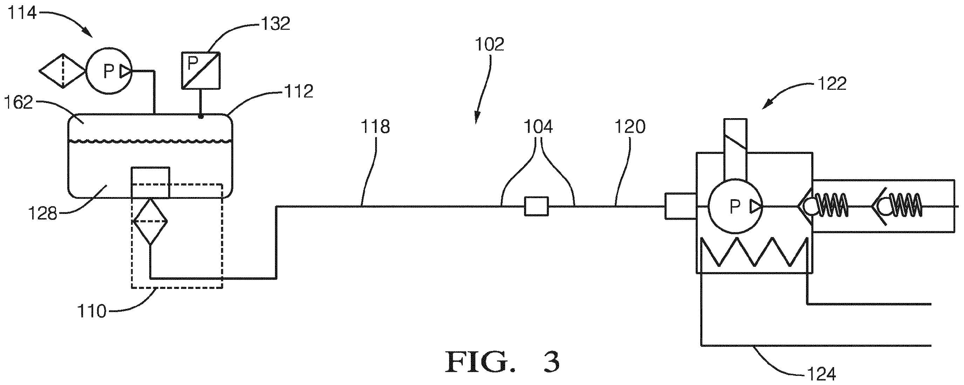

Figure 3 shows a Selective Catalytic Reduction (SCR) dosing system 102 for supplying a reagent such as urea to a dosing injector module 122.

The system 102 comprises a urea tank 112, which is pressure-resistant, a pressure sensor 132 for sensing air pressure within the urea tank 112, a reagent delivery module comprising a Urea Delivery Module (UDM) 110, and a feed line 104.

The UDM 110 comprises a filter, an electrical heater, and a temperature sensor. The UDM may optionally further comprise a level sensor.

The tank 112 contains a volume of urea 128, and a volume of air 162.

The feed line 104, which comprises a first freeze-resistant section 118 and a second freeze resistant, high temperature section 120, supplies urea from a volume of the urea 128 in the urea tank 112, via the UDM 110, to an injector module 122 comprising a dosing injector such as a pump-injector, which is water-cooled by coolant provided from a coolant supply line 124.

The urea tank 112 is pressurised, by a source of air pressure. In the SCR dosing system 102 illustrated in Figure 3, which is not covered by the invention, the source of air pressure is an air pump assembly 114, comprising an electric air pump and a filter. In alternative versions, the urea tank 112 could be pressurised by compressed air from a vehicle brake system (i.e. in heavy duty applications), compressed air from a mechanical air pump on a cam shaft/alternator etc., compressed air from an air suspension system, boosted air pressure from an inlet manifold, or by a combination of suitable sources of air pressure.

In this SCR dosing system 102, the pressure of a volume of urea 128 within the urea tank 112 is maintained at a set value defined by the engine coolant temperature. The system 102 thereby ensures that pressure is set such that the boiling point of the urea is always maintained to a greater value than the engine coolant temperature.

By way of example, the air pressure could be controlled by one or more of the following methods:
- monitoring of the pressure of the urea tank 112 by using the pressure sensor 132, and controlling the electric air pump of the air pump assembly 114 so as to achieve the set value of air pressure;
- monitoring of the pressure of the urea tank 112 by using the pressure sensor 132, and regulating the supply of compressed air using an actuator (solenoid) so as to achieve the set value of air pressure;
- monitoring the pressure of the urea tank 112 using the pressure sensor 132, monitoring the boosted air pressure, and regulating the supply of boosted air using an actuator (solenoid) in so as to achieve the set value of air pressure.

The present invention provides a simple and inexpensive system, which operates on air, which is not subject to the requirements of freezing, and which does not require an additional cooler.

Furthermore, urea in the urea tank 112 degrades at a slower rate when pressurised, system leaks can be diagnosed by monitoring the pressure decay when the air supply is off, and dosing delivery can be checked, monitored and/or calibrated by monitoring the pressure decay whilst the air supply is turned off.

The present invention also provides for checking that dosing is occurring after a freeze/thaw cycle.

The operation of the UDM 110 could be further optimised by monitoring of the level of urea in the urea tank 112, or by a refill check.

The air pump and pressure sensor could be integrated in the UDM 110, and a snorkel could be added to bring air to the top of the urea tank 112. This would allow a simple removal and replacement of the UDM 110, without requiring the external outline of the urea tank 112 to be changed.

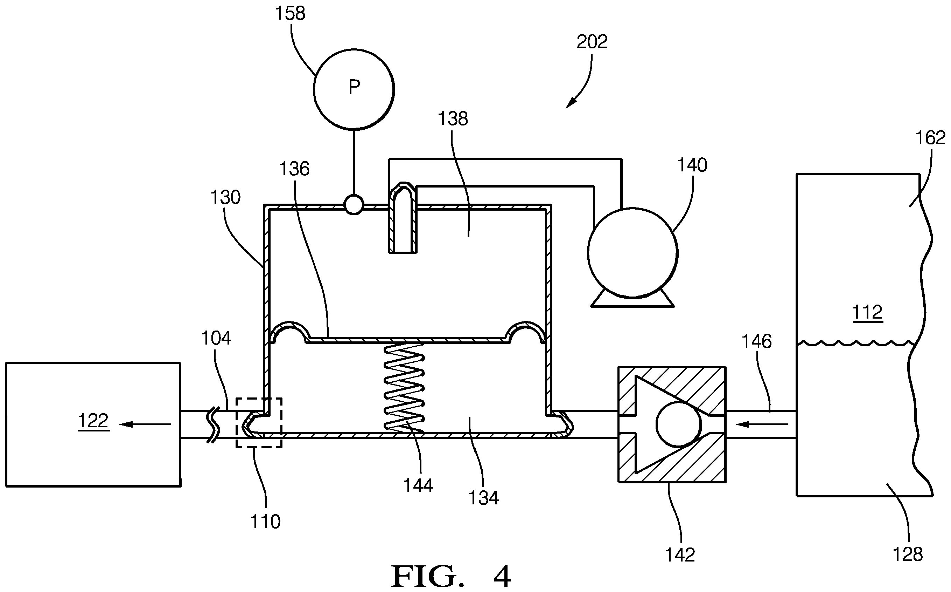

In another SCR dosing system 202 as shown in Figure 4, which is not part of the invention, the main urea tank is not pressurised.

The SCR dosing system 102, which is not part of the invention, comprises a main urea tank 112, a UDM 110 and a feed line 104. It further comprises a secondary vessel 130, containing a secondary volume of urea 134, which communicates with the main volume of urea 128 in the main urea tank 112. The secondary vessel 130 is smaller than the main urea tank 112, and the secondary volume of urea 134 is smaller than the main volume of urea 128 contained in the main urea tank 112.

The secondary vessel 130, which is shown schematically in cross-section in Figure 4, is provided internally with a flexible separating member comprising a diaphragm 136, which separates a secondary volume of air 138 from the secondary volume of urea 134. The secondary vessel 130 is shown in a static condition in Figure 4. The secondary volume of air is pressurised, by an air pump 140, thereby applying a force onto the diaphragm 136, which in turn deflects into the secondary volume of urea, thereby pressurising the secondary volume of urea 134. The high pressure urea, which has an increased boiling point and is thereby prevented from boiling, is supplied, via the UDM 110 and the feed line 104, to the injector module 122.

A control unit (not shown in Figure 4) controls the air pump 140, to maintain a selected pressure, by using inputs from a pressure sensor 158 and an algorithm. Deflection of the diaphragm 136 is restricted, to allow a controlled fluid volume of urea to be consumed. The control unit calculates the level of the secondary volume of urea 134 using the inputs from the pressure sensor 158 and the algorithm, to detect when the level of the secondary volume of urea 134 falls below a predetermined threshold, at which point the control unit initialises a refill cycle to replenish the supply of urea in the secondary vessel 130, with urea from the main supply of urea 128 within the main urea tank 112, via an intermediate supply line 146.

During the refill cycle, the air pump 140 vents pressure from the secondary volume of air 138 in the secondary vessel 130, and the diaphragm 136 moves under a returning force, back to the static condition. A vacuum is thereby created in the volume below the diaphragm 136, and the vacuum pressure draws urea in the secondary vessel 130 from the vented main urea tank 112, along the intermediate supply line 146.

A one-way valve 142 is optionally provided in the intermediate supply line 146 to prevent urea from leaking back to the main urea tank 112 from the secondary volume of urea 134.

Once the control unit senses that the refill cycle is complete, venting of the pressure from the secondary volume of air 138 is ceased, and the diaphragm 136 returns to its original, static position. The returning force of the diaphragm 136 is determined by a combination of existing urea pressure, and the tension of the diaphragm 136. If required, a spring 144 may be provided in the secondary vessel 130, to provide an additional returning force to the diaphragm 136.

In addition to providing a simple and inexpensive system which enables pressurisation of the urea by an air-based system, this SCR dosing system 202, which is not part of the invention, removes the requirement for a pressure-resistant urea tank. It also allows for reduced actuations of the air pump 140 (compared with pressurising the main tank 112), due to a reduced volume of air 162 being pressurised.

The arrangement of Figure 4 also provides an advantage of flexibility of urea volume and packaging.

A further key advantage of this SCR dosing system 202, which is not part of the invention, is compatibility with existing vehicle tank systems without requiring major modification to existing urea storage tanks.

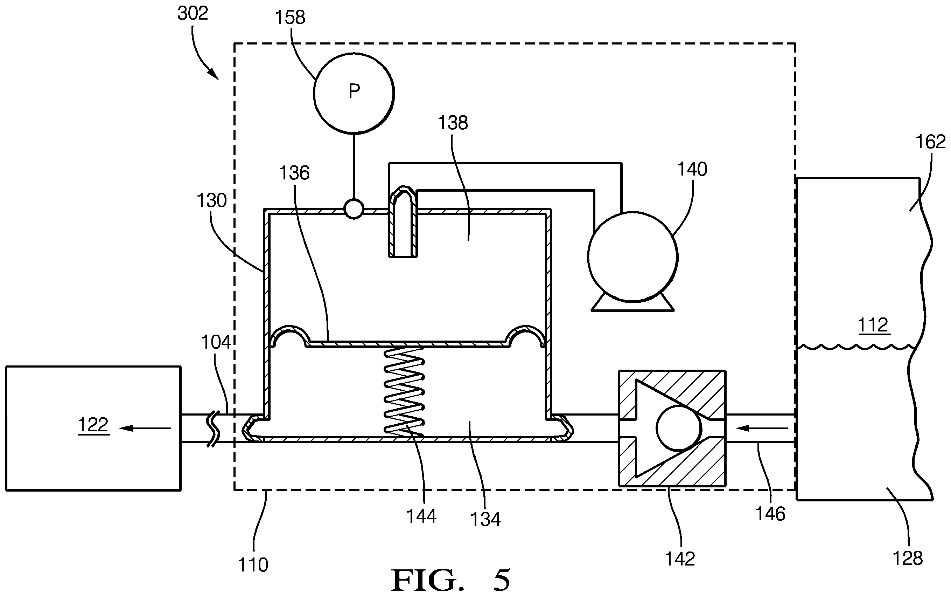

A SCR dosing system 302 , which is not part of the invention, is illustrated in Figure 5. This arrangement is the same as the before mentioned SCR dosing system 202, except that the secondary vessel 130 is provided as part of the UDM 110, which is mounted to the main urea tank 112. Functions for both the main urea tank 112 and the secondary vessel 130 may therefore be provided within a single UDM 110.

The SCR dosing system 302 , which is not part of the invention, is advantageous in that the UDM 110 is compatible with current SCR dosing systems; it allows for simple upgrade of existing systems, without major modification.

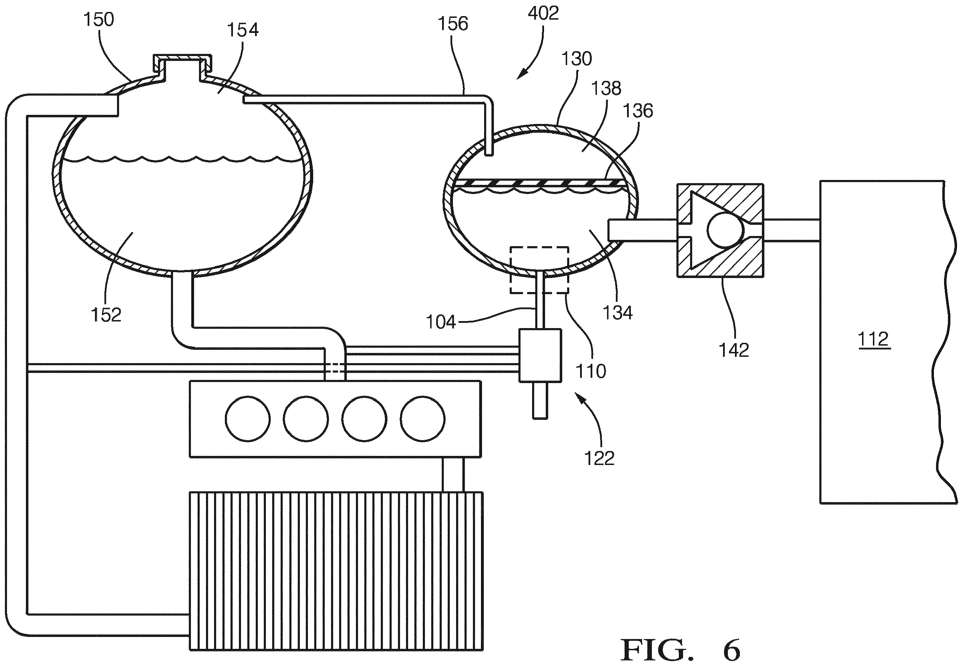

A SCR dosing system 402, in accordance with a first embodiment, as illustrated in Figure 6, also comprises a main urea tank 112, a UDM 110, and a feed line 104. In common with the two earlier mentioned systems 202 and 302, the first embodiment also further comprises secondary vessel 130, comprising a secondary volume of urea 134 and a secondary volume of air 138, separated by a diaphragm 136.

In the SCR system 402 of the first embodiment, the secondary volume of air 138 in the secondary vessel 130 is pressurised by an air source provided by the vehicle coolant expansion tank 150, which communicates with the secondary vessel 130 by a pathway comprising an air pressure pathway section 156. Pressure of coolant fluid 152 within the coolant expansion tank 150 increases as the vehicle engine and the coolant fluid 152 increase in temperature; the coolant fluid 152 protects the engine from overheating, and the increase in pressure protects the coolant fluid 152 from boiling. Air 154 trapped in the coolant expansion tank 150 is thereby pressurised, and this pressurised air is communicated from the vehicle coolant expansion tank 150 to the secondary vessel 130 via the air pressure pathway section 156. In a similar manner to the two earlier mentioned systems 202 and 302, not part of the invention, the secondary volume of air 138 in the secondary vessel 130 exerts a force upon the diaphragm 136, thereby urging the diaphragm 136 into the secondary volume of urea 134. The pressure of the secondary volume of air 138 thereby pressurises the secondary volume of urea 134 via the diaphragm 136; the higher boiling point of the urea again prevents the urea from boiling. In common with the SCR dosing system 202, which is not part of the invention, the pressurised urea is supplied to the injector module 122 via the UDM 110 and the feed line 104.

In common with the two earlier mentioned SCR dosing systems 202 and 302, the secondary volume of urea 134 is topped up from the main volume of urea 128 contained in the main urea tank 112. Again, one-way valve 142 is optionally provided to prevent urea from leaking back into the main tank 112.

In addition to the advantages of the three earlier mentioned SCR dosing systems 102, 202 and 302 which are not part of the invention, the SCR system 402 of the first embodiment is self-controlling, with no requirement for external actuators. Furthermore, an additional pump is not required as a pressure source, and no significant level of software is required.

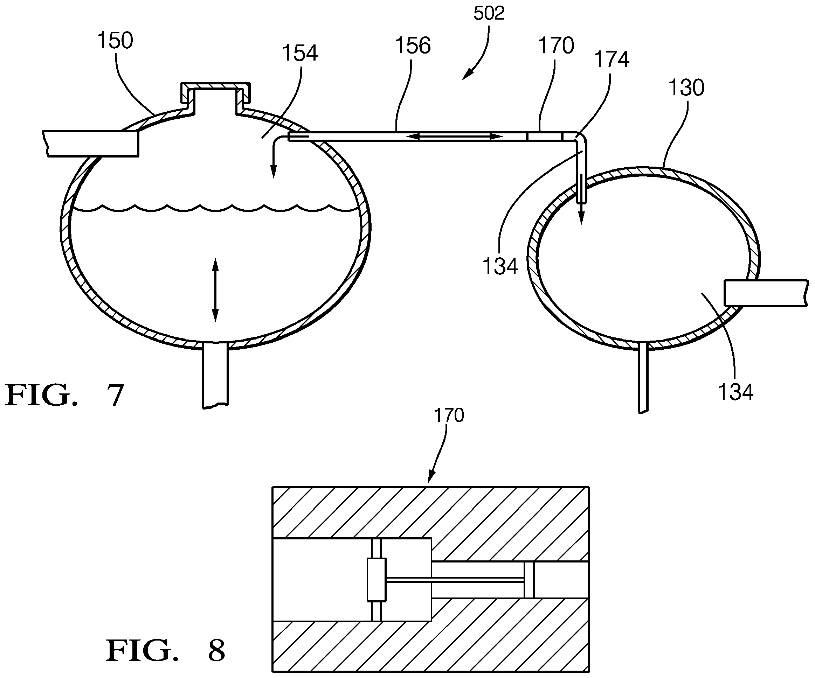

A SCR system 502 in accordance with a second embodiment of the present invention, part of which is illustrated in Figure 7, is similar to the first embodiment in that the source of air pressure is the coolant expansion tank 150.

However, in the second embodiment, the pathway comprises a urea filled pathway section 174 in addition to the air pressure pathway section 156. The air pressure pathway section 156 is separated from the urea filled pathway section 174 by a piston 170, which is shown in greater detail in Figure 8.

In the second embodiment, the secondary volume of urea 134 comprises the volume of urea within the secondary vessel 130, and also a volume of urea within the urea filled section 174 of the pathway.

Pressurised air from the vehicle expansion tank 150 is communicated to the air pressure pathway section 156, and acts upon the piston 170, which subsequently pressurises the secondary volume of urea 134.

In the same manner as the earlier mentioned system 302, not part of the invention, and the first embodiment 402, high pressure urea is then supplied to the injector module 122 via the feed line 104 (both not shown in Figure 7).

In a further embodiment of the present invention, a diaphragm or piston may not be provided to separate air from the secondary volume of urea 134. The source of air pressure therefore acts directly upon the secondary volume of urea 134.

In the above embodiments, a single UDM 110 is provided, encompassing all necessary functions. However, in alternative embodiments, more than one UDM could be provided, dealing with different functions, or sharing functions between all UDMs. For example, a first UDM may be associated with the main urea tank 112, and a second UDM may be associated with the secondary vessel 130. Alternatively, separate components could be provided in substitution for the UDM, to undertake the necessary functions.

### REFERENCES

SCR dosing system 102, 202, 302
feed line 104
UDM 110
urea tank 112
air pump assembly 114
feed line first section 118
feed line second (high temperature) section 120
dosing injector module 122
coolant supply line 124
(main) volume of urea 128
secondary vessel 130
pressure sensor 132
secondary volume of urea 134
diaphragm 136
volume of air 138
air pump 140
one-way valve 142
spring 144
first urea supply line 146
coolant expansion tank 150
coolant fluid 152
air 154
air pressure pathway section 156
pressure sensor 158
volume of air (in main urea tank) 162
piston 170
pathway urea filled section 174

## Claims

1. A reagent dosing system (402, 502) for dosing a reagent into an exhaust gas flow of a vehicle, the reagent dosing system (402, 502) comprising:
a dosing injector module (122) for supplying the reagent to the exhaust gas flow;
a main reagent tank (112) for storing a main volume of reagent (128);
a secondary vessel (130) separate from the main reagent tank (112) comprising a secondary volume of reagent (134), wherein the secondary volume of reagent (134) is smaller than the main volume of reagent (128);
a feed line (104) for supplying reagent from the secondary vessel (130) to the dosing injector module (122) via a reagent delivery module (110) and;
a source of air pressure (114) which pressurises the secondary volume of reagent (134),
**characterized in that** the source of air pressure is a coolant expansion tank (150) of a vehicle, which communicates with the secondary vessel (130) via a pathway comprising an air pressure pathway section (156).

2. A reagent dosing system as claimed in claim 1 wherein a flexible separating member (136) is located within the secondary vessel (130), to separate a volume of air (138) and the secondary volume of reagent (134);
and wherein the volume of air (138) is pressurised by the source of air pressure, thereby to apply a force to the flexible separating member (136) and thereby cause pressurisation of the secondary volume of reagent (134).

3. A reagent dosing system as claimed in claim 2, wherein during the refill cycle, the air pump (140) vents air from the volume of air (138), thereby causing the flexible separating member (136) to move to a static position and create a vacuum in the secondary volume of reagent (134), thereby causing reagent to be drawn into the secondary volume of reagent (134) from the main volume of reagent (128).

4. A reagent dosing system as claimed in claim 3, wherein a one-way valve (142) is provided to prevent a leak flow of reagent from the secondary volume of reagent (134) back to the main volume of reagent (128).

5. A reagent dosing system as claimed in claim 1 wherein the pathway further comprises a reagent filled pathway section (174), wherein the air pressure pathway section (156) and the reagent filled pathway section (174) are separated by a piston (170);
and wherein the volume of reagent which is pressurised by the source of air pressure further comprises a volume of reagent within the reagent filled pathway section (174);
and wherein the source of air pressure pressurises the volume of reagent via the piston (170).

## Patentansprüche

1. Reagensdosiersystem (402, 502) zum Dosieren eines Reagens in einen Abgasstrom eines Fahrzeugs, wobei das Reagensdosiersystem (402, 502) aufweist:
ein Dosierinjektormodul (122) zum Liefern des Reagens an den Abgasstrom;
einen Hauptreagenstank (112) zum Aufnehmen eines Hauptvolumens von Reagens (128);
einen Sekundärbehälter (130), getrennt von dem Hauptreagenstank (112), der ein Sekundärvolumen von Reagens (134) aufweist, wobei das Sekundärreagensvolumen (134) kleiner ist als das Hauptreagensvolumen (128);
eine Zufuhrleitung (104) zum Liefern von Reagens von dem Sekundärbehälter (130) an das Dosierinjektormodul (122) über ein Reagensliefermodul (110); und
eine Luftdruckquelle (114), die das Sekundärreagensvolumen (134) unter Druck setzt,
**dadurch gekennzeichnet, dass** die Luftdruckquelle ein Kühlmittelexpansionstank (150) eines Fahrzeugs ist, der mit dem Sekundärbehälter (130) über einen Pfad kommuniziert,
der einen Luftdruckpfadabschnitt (156) aufweist.

2. Reagensdosiersystem gemäß Anspruch 1, wobei ein flexibles Trennelement (136) innerhalb des Sekundärbehälters (130) angeordnet ist, um ein Luftvolumen (138) und das Sekundärreagensvolumen (134) zu trennen; und
wobei das Luftvolumen (138) durch die Luftdruckquelle unter Druck gesetzt wird, um dadurch eine Kraft auf das flexible Trennelement (136) auszuüben und dadurch eine Druckbeaufschlagung des Sekundärreagensvolumens (134) zu bewirken.

3. Reagensdosiersystem gemäß Anspruch 2, wobei während des Nachfüllzyklus die Luftpumpe (140) Luft aus dem Luftvolumen (138) entlüftet, wodurch bewirkt wird, dass sich das flexible Trennelement (136) in eine statische Position bewegt und ein Vakuum in dem Sekundärreagensvolumen (134) erzeugt wird, wodurch bewirkt wird, dass Reagens aus dem Hauptreagensvolumen (128) in das Sekundärreagensvolumen (134) gezogen wird.

4. Reagensdosiersystem gemäß Anspruch 3, wobei ein Einwegventil (142) vorgesehen ist, um einen Leckfluss von Reagens aus dem Sekundärreagensvolumen (134) zurück zu dem Hauptreagensvolumen (128) zu verhindern.

5. Reagensdosiersystem gemäß Anspruch 1, wobei der Pfad weiter einen mit Reagens gefüllten Pfadabschnitt (174) aufweist, wobei der Luftdruckpfadabschnitt (156) und der mit Reagens gefüllte Pfadabschnitt (174) durch einen Kolben (170) getrennt sind; und
wobei das Volumen von Reagens, das durch die Luftdruckquelle unter Druck gesetzt wird, weiter ein Volumen von Reagens in dem mit Reagens gefüllten Pfadabschnitt (174) aufweist; und
wobei die Luftdruckquelle das Volumen von Reagens über den Kolben (170) unter Druck setzt.

## Revendications

1. Système de dosage de réactif (402, 502) pour doser un réactif vers un flux de gaz d'échappement d'un véhicule, le système de dosage de réactif (402, 502) comprenant :
un module injecteur de dosage (122) pour alimenter le réactif vers le flux de gaz d'échappement ;
un réservoir principal de réactif (112) pour stocker un volume principal de réactif (128) ;
un récipient secondaire (130) séparé du réservoir principal de réactif (112) et comprenant un volume secondaire de réactif (134), dans lequel le volume secondaire de réactif (134) est plus petit que le volume principal de réactif (128) ;
un conduit d'alimentation (104) pour fournir le réactif depuis le récipient secondaire (130) vers le module injecteur de dosage (122) via un module de distribution de réactif (110) ; et
une source d'air sous pression (114) qui met sous pression le volume secondaire de réactif (134),
**caractérisé en ce que** la source d'air sous pression est un réservoir d'expansion pour réfrigérant (150) d'un véhicule, qui communique avec le récipient secondaire (130) via un passage comprenant un tronçon de passage d'air sous pression (156).

2. Système de dosage de réactif selon la revendication 1, dans lequel un élément de séparation flexible (136) est situé à l'intérieur du récipient secondaire (130), pour séparer un volume d'air (138) et le volume secondaire de réactif (134) ;
et dans lequel le volume d'air (138) est mis sous pression par la source d'air sous pression, afin d'appliquer ainsi une force sur l'élément de séparation flexible (136) et par conséquent entraîner une mise sous pression du volume secondaire de réactif (134).

3. Système de dosage de réactif selon la revendication 2, dans lequel pendant le cycle de reremplissage, la pompe à air (140) évacue les hors du volume d'air (138), en amenant ainsi l'élément de séparation flexible (136) à se déplacer à une position statique et créer un vide dans le volume secondaire de réactif (134), en amenant ainsi le réactif à être aspiré vers le volume secondaire de réactif (134) depuis le volume principal de réactif (128).

4. Système de dosage de réactif selon la revendication 3, dans lequel un clapet antiretour (142) est prévu pour empêcher l'écoulement d'une fuite de réactif depuis le volume secondaire de réactif (134) en retour vers le volume principal de réactif (128).

5. Système de dosage de réactif selon la revendication 1, dans lequel le passage comprend en outre un tronçon de passage (174) rempli de réactif, dans lequel le tronçon de passage d'air sous pression (156) et le tronçon de passage rempli de réactif (174) sont séparés par un piston (170) ;
et dans lequel le volume de réactif qui est mis sous pression par la source d'air sous pression comprend en outre un volume de réactif à l'intérieur du tronçon de passage rempli de réactif (174) ;
et dans lequel la source d'air sous pression met sous pression le volume de réactif via le piston (170).
